# Europäisches Patentamt
# European Patent Office
# Office européen des brevets

(19)

(11) Publication number: **0 030 686**
**B1**

(12)

# EUROPEAN PATENT SPECIFICATION

(45) Date of publication of patent specification: **08.08.84**

(21) Application number: **80107616.7**

(22) Date of filing: **04.12.80**

(51) Int. Cl.³: **G 03 B 27/00,**
**G 03 G 15/00, H 04 N 1/04**

(54) Optical element adjustment apparatus and method.

(30) Priority: **17.12.79 US 104206**
**17.12.79 US 104255**

(43) Date of publication of application:
**24.06.81 Bulletin 81/25**

(45) Publication of the grant of the patent:
**08.08.84 Bulletin 84/32**

(84) Designated Contracting States:
**DE FR GB**

(56) References cited:
**GB - A - 1 374 521**
**GB - A - 2 010 632**
**US - A - 3 537 788**
**US - A - 3 981 579**
**US - A - 3 988 683**
**US - A - 4 005 934**

(73) Proprietor: **International Business Machines Corporation**
**Old Orchard Road**
**Armonk, N.Y. 10504 (US)**

(72) Inventor: **Birdsall, Ivan Patrick**
**2210 Park Lake Drive**
**Boulder Colorado 80301 (US)**
Inventor: **Bradmon, Paul Jay**
**3 University Circle**
**Longmont Colorado 80501 (US)**
Inventor: **Buddington, Donald Lee**
**5290 Spotted Horse Trail**
**Boulder Colorado 80301 (US)**
Inventor: **Garcia, Vincent Henry**
**4212 Meining Road**
**Berthoud Colorado 80513 (US)**
Inventor: **Nelson, Don Selby**
**8349 Webster Street**
**Arvada Colorado 80003 (US)**

(74) Representative: **Atchley, Martin John Waldegrave et al,**
**IBM United Kingdom Patent Operations Hursley Park**
**Winchester, Hants, SO21 2JN (GB)**

# Description

The invention relates to apparatus and methods for adjusting the optical elements of a copier.

Electrophotographic apparatus, for example a copier using xerographic principles, focuses an illuminated image of an original document on a photoconductive surface. The surface is selectively charged and discharged in accordance with the image. Copies of the original result from the transfer of a developing material from this surface to the copy medium. A basic determinant of copy quality is therefore the accuracy of the image focus. Since the image is usually scanned onto the photoconductor by a moving reflector, another important factor in copy quality is the accuracy of the relationships among the scanning elements. Copiers often permit the copy to be smaller than the original, an effect obtained by optical manipulation. The accuracy of this manipulation will have a significant affect on copy quality. A document glass is normally used to position the original document. The placement of index marks on the glass relative to the image ultimately formed on the photoconductor surface significantly affects copy quality.

Assuming that the above factors affecting copy quality can be accurately adjusted and aligned initially, with time, the copy quality will, nevertheless, deteriorate due to mechanical wear, slippage, stretching and the like.

It is, therefore, evident that an accurate initial adjustment and alignment technique is essential to the manufacture of a high-quality copier and that if this technique is simple, the same technique will be useful in maintaining the operation of a copier.

Typically, adjustment of lenses, lights, carriages, fibre-optic bundles, reflectors, mirrors, document glasses, etc. has been performed manually by skilled technicians. For example, the photoconductor surface may be replaced with a temporary screen for viewing the image during adjustment. The technician then adjusts the copier elements for the best apparent focus. Depending upon the complexity of the copier, the "best" focus may occur for different adjustments depending upon, for example, what part of the original document is scanned or whether the copy is being reduced. Among the problems with this approach is the difficulty of imitating the actual copier operation (such as scanning), the requirement that a "best" focus be selected from among several possible best foci, reliance upon the technician's subjective evaluation of focus and the normal human failings resulting from fatigue and inattention. In addition, this approach is slow and gives inconsistent, as well as inaccurate, results. As the copier gets smaller and more complex, it becomes ever more difficult to quickly make the accurate adjustments necessary for an economically manufacturable copier.

The prior art discloses some attempts to minimize the manual steps involved in adjusting and aligning copiers. In US—A—3,510,219, a variety of manual adjustments are facilitated by providing a levelling device for the document glass, a universally adjustable lens mounting, and the like. It is also known to place a television camera in a position which permits the technician to conveniently view the image essentially as it would appear on the photoconductor surface. Accuracy of adjustment and alignment has also been increased by substituting, during manufacture, a narrow beam of coherent light for the light source normally used during copying. None of these approaches eliminates all the manual steps and, therefore, to some extent, they all share the short-comings inherent in humans.

Partially automated focusing and alignment systems are known in the prior art. In US—A—3,623,790, a servo loop maintains a constant spacing between a lens and a film plane to both guarantee focus and avoid contact with the film. In US—A—4,007,326, an electrical analog of a copy image is compared with an electrical analog of an original image. The copy and the original are adjusted until a comparison circuit connected to a television monitor causes the television images to cancel — indicating correct focus. US—A—3,662,662 uses two optical systems to illuminate two photo cells. If one optical system is adjusted identically to the other (reference) system, both cells will be equally illuminated — indicating correct focus. All the foregoing require either human judgment, duplicate optics or rigidly-fixed adjustment parameters.

Attempts have been made to completely remove the subjective human element from the determination of focus. In US—A—3,691,922, the point of sharpest focus occurs when a photocell detects a predetermined brightness/darkness distribution. In US—A—3,593,286, an electronic image dissector tube is used to electronically scan an optical image and store electrical signals of the image for subsequently establishing similarities or changes between successive images. An electronic light sensor mechanically scans an image to determine the point of best focus in the Focatron Model P-122 marketed by Logetronics, Inc., Alexandria, Virginia. In the foregoing, changes in light distribution are analyzed and the plane of sharpest image is recognized when the largest number of target objects are recognized. An ITT Model F4100 Vidissector camera tube used in ITT Model F5019 camera unit marketed by the ITT Aerospace/Optical Division, Fort Wayne, Indiana, electronically scans an image and supplies signals indicative of image light levels. A suggested procedure for determining the sharpest vidissector camera focus includes the step of monitoring the video output for maximum white level and dark level response. In an IBM Technical Disclosure Bulletin article published July, 1972, pages 504—505, focusing is automatically adjusted as a function of a comparison between the widths of photocurrent pulses from light detectors.

According to the invention, apparatus for adjusting the optical elements of a copier to positions forming images of lines on an illuminated target background, which have the greatest background-to-line illumination contrast, is characterised by an electronic scanner operable to examine repeatedly the same target line images and generate, for each line, signals manifesting the amount of light reflected by that line relative to the target background, driving devices, for positioning the copier optical elements during repeated operation of the scanner, a first circuit for identifying the signals from the scanner representing the greatest light reflection changes caused by scanning across a line width, thereby indicating the sharpest image of the scanned line, and a second circuit for repositioning the copier optical elements after operation of the scanner as a statistical function of the sharpest images indicated for the scans of all lines.

The invention extends to a method of aligning the optical elements of a document copier and adjusting them for the best focus of an image of an illuminated series of lines retained in a place normally occupied by a document, including the steps of scanning each line repeatedly to generate signals encoded to represent values related to the light reflected from the line, adjusting the optical elements to change the image focus for each scan, and comprising successive values and generating additional signals encoded to represent values equivalent to the sharpness of the image of the line for each scan, identifying for each line that position of the optical elements, where the image is sharpest, and generating further signals encoded to represent values equivalent to the average of the values corresponding to the sharpest images, and adjusting the optical elements as a function of the signals representing aforesaid average.

Optimum adjustment of the optical elements in a copier is automatically obtained, without involving subjective judgments regarding sharpness of focus, for an entire image plane and for more than one degree of magnification. The actual image at the image plane (the photoconductor in a xerographic copier, paper in an inkjet copier) is used for optical adjustment and alignment without placing any physical restrictions on copier optical design and without introducing complex mechanical elements. The adjustment process utilizes existing drive elements and an additional electronically controlled image scanner. Thus, the optical elements may be adjusted and fixed in position, as a unit, before final assembly of the copier.

In general, apparatus according to the invention examines the image of an illuminated target, locates target lines and scans one line at a time repeatedly while adjusting optical parameters and recording the scan position and numbers representing the light levels (which indicate apparent focus values of the scanned target line for each adjustment). The position of the lowest light levels (indicating the best focus values) of all the scanned lines are averaged and the optical parameters are readjusted to this "best" overall focus. If different magnification ratios are provided in the copier, for image reduction, the adjustments for "best" focus are then tested for each magnification ratio, and appropriate adjustments are made to ensure that the same focus sharpness is obtained for all magnification ratios. Also, if desired, the invention permits alignment of the document retainer, which carries the target, with a predetermined desired document retainer target position.

More particularly, apparatus according to the invention may be used automatically to adjust and align a copier optical system during manufacture and prior to normal use. The position on the document glass normally occupied by an original document is filled by a master document carrying an alignment target of specially placed lines. The target is illuminated by the normal copier light source operated in its normal manner. For example, in a scanning light system, a bar of light scans the target. At the position normally occupied by the photoconductor is placed an image dissector electronic scanning camera connected to control circuits. The control circuits control electronic scanning of areas on the target, receive information from the camera identifying the locations scanned, and control drive motors which reposition the camera to different target areas and adjust various elements of the copier's optical system.

In operation, the camera is positioned to a target area having a line. A scan is made until the line position is located and, then, repeated scans of the line location are made while the optical system is adjusted in steps through various degree of focus. Light level is measured during each line location scan. The line position is initially identified by a drop in light level from a predetermined function of the measured light level. Then, this predetermined function of the measured light level is stored for subsequent best focus determination. The controls record the light level detected by the camera for different focus adjustments, during each line scan; the lower the light level, the sharper the focus during each scan. The best line focus is determined by comparing light levels, measured while repeatedly scanning a line, with a function of the previously detected light levels. The lowest light level, less than the previous light levels, is the focus value of the line.

The operation is repeated for a number of preselected target areas, each containing a line. Subsequently, the quantity, for each line, representing the sharpest focus for that line may be selected and a statistical "best" overall focus for the entire target selected. The optical system is then readjusted and fixed in this "best" focus position. If the copier provides for variable magnification, such as copy-size reduction, the "best" optical system is moved to its other manifications and adjusted until for each position, the "best" focus is attained. The variable magnification elements are then also fixed in position. If desired, the document glass can be aligned with the optics by moving it to bring the previously recorded target line positions into register with line positions also stored by the controls.

The scope of the invention is defined by the appended claims; and how it can be carried into effect is hereinafter particularly described with reference to the accompanying drawings, in which:

Figure 1 is a schematic representation of a copier optical system incorporating the invention;

Figure 2 is a plan view of a master document of Figure 1 on a document glass;

Figure 3 is a three-dimensional view of the copier optical system;

Figure 4 illustrates scanning of a test pattern on a master document;

Figure 5 is a block diagram of a data processor for use with the system;

Figure 6 is a schematic diagram of a processor output circuit for driving a motor;

Figure 7 is a schematic diagram of a processor input circuit operated by a switch;

Figure 8 is a block diagram of an image dissector camera unit;

Figure 9 is a block diagram of an image dissector camera control unit;

Figure 10 is a cross-sectional schematic view of an image dissector tube;

Figure 11 is a diagram illustrating an image on the tube of Figure 10;

Figure 12 is a block diagram illustrating operation of the invention; and

Figures 13 to 15 are flow diagrams illustrating operation of the invention.

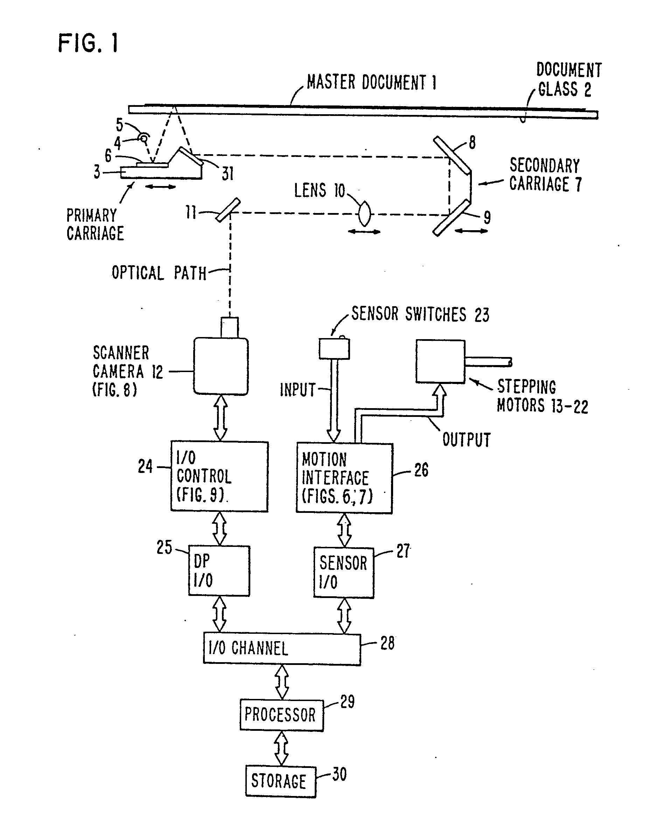

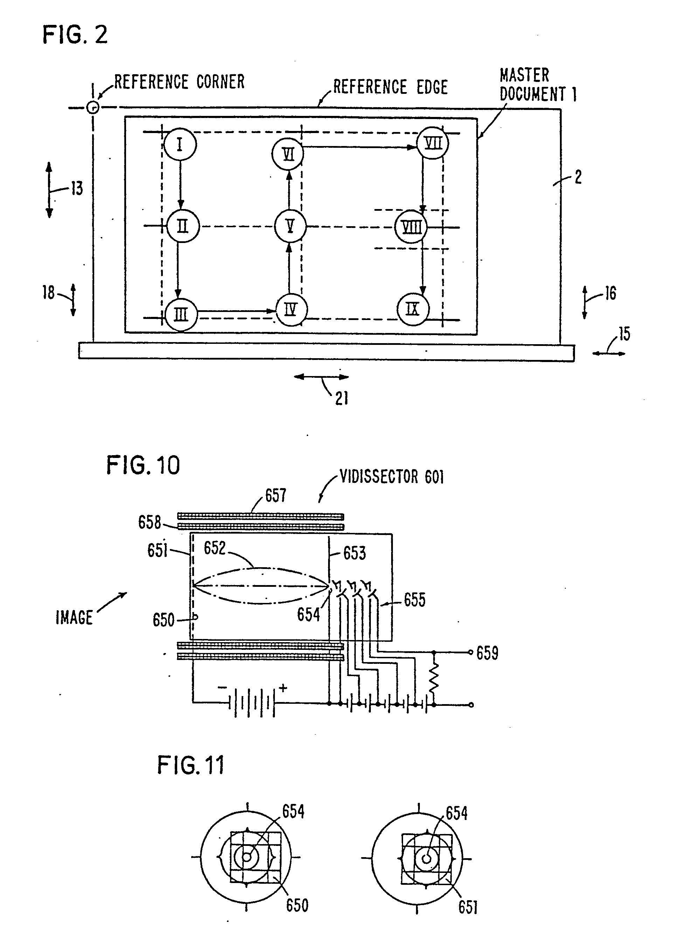

General description — Figures 1 and 2

Referring first to Figure 1, there is shown a master document 1 mounted on a document glass 2 carrying lines in juxtaposition with the document glass so that light may pass through the document glass 2 to the lines on the master document 1 which may be a transparent, translucent or opaque sheet. A movable primary carriage 3 carries a lamp 4 which emits light reflected from a reflector 5 and a mirror 6 onto the master document 1 as the primary carriage moves in the direction shown parallel to the glass 2. The light is reflected from the master document to another mirror 31 carried on the primary carriage 3 and then to mirrors 8 and 9 on a secondary carriage 7 movable in the direction shown parallel to the glass 2. The light reflected from the mirror 9 passes through a lens 10 movable in the direction shown parallel to the glass 2 and then is reflected from a mirror 11 which is in fixed relationship to a scanner camera 12. The scanner camera 12 is capable of scanning an image of an area on the master document 1 made available to its optical input as a result of the light scanned onto the master document from the lamp 4. The limited area made available to the scanner camera 12 is "dissected" by the electronic circuitry associated with the scanner camera 12 and digitized so that, at an electronic output from the scanner camera 12, there is available digital data representing light values sequentially scanned by the scanner camera 12 in the area determined by the lamp 4.

Stepping motors 13 to 22 are provided to move the document glass 2, the carriages 3 and 7, the lens 10 and the scanner camera 12. Sensor switches 23 are provided at various points to sense the limits of motion of the mechanical elements associated with the system. The stepping motors 13 to 22 and the sensor switches 23 interact to provide predetermined areas of examination to the scanner camera 12 so that digital data is available indicating light values on areas of the master document 1 necessary to the operation of the invention.

The digital data available from the scanner camera 12 is interpreted by input/output controls 24 and 25 which are connected via an input/output channel 28 to a processor 29 having a storage 30. Signals essential for the scanner camera 12 to operate in accordance with the necessary scanning commands are provided to the input/output control 24 from the processor 29 in accordance with a logical sequence partially recorded in the storage 30. The necessary movements of the master document 1 and the associated optical elements, for example primary carriage 3, secondary carriage 7 and lens 10, are accomplished by commands from the processor transferred to the stepping motors 13 to 22 by way of sensor input/output circuits 27 and motion interface circuits 26.

The general configuration and operation of the apparatus incorporating the invention will be understood by reference to Figure 2, which is a plan view of the master document 1 on the glass 2, illustrating the areas I to IX made available to the scanner camera 12 for scanning operations. Areas I to IX are arranged into columns (for example I, VI, VII) and rows (for example I, II, III). The master document 1 is illustrated as mounted on the document glass 2 which is viewed from the side from which light is scanned. The scanning camera 12 is moved in desired directions by stepping motor 13 to position different columns of the document 1 relative to the camera 12. The primary carriage 3 is moved by motor 21 to position different rows on the document 1 relative to the camera 12. As the motors 13 and 21 are stepped, they move the primary carriage 3 and the scanner camera 12 to selected areas I to IX on the master document 1 one at a time. A reference edge and a reference corner are provided for the document glass 2 to initialize its position and provide reference information for proper alignment. Initially, area I is brought into the imaging area of the scanner camera 12. When operations are completed in the area I, motor 13 causes the scanner camera 12 to move to bring area II into its field of operation. Similarly, motor 13 causes field III to be examined by the camera 12. Movement from area III to area IV is accomplished by moving the primary carriage 3 via motor 21. Subsequently, areas V and VI are reached by movement of the camera 12 by motor 13. Area VII is reached by moving the primary carriage 3, and Areas VIII and IX are reached by movement of the camera 12.

Still referring to Figure 2, there are provided on the master document 1 a number of lines which fall within the areas I to IX. For example, a line (column), shown dashed for illustration, falls within the area I. When the area I is made available to the camera 12, the camera 12 electronically scans area I until the vertical line is found. The position, that is the coordinates, of the point at which the line was found is recorded as digital data by the processor 29. Prior to finding the line, the light values of the background, that is the non-line area, of the master document 1 are also recorded by the processor 29. Once the vertical line in the area I is found, the line itself is repeatedly scanned and the light values for each scan are recorded by the processor 29. The optical elements, for example secondary carriage 7, are adjusted for each scan so that the light values recorded by the processor 29 will be a function of the position of the optical elements. Utilizing the observation that the line will appear to be darker when it is in focus than when it is not in focus, the light values recorded will be indicative of the apparent degree of focus of the vertical line of the area I for each different optical element position. The processor 29 will monitor the light values, attempting to identify any light value that is less than the previous light value. Thus, there will be recorded, for each line, a light value that indicates "improved" focus. That is, improving focus causes the line to appear to get darker relative to the previously recorded background. When light values increase (get brighter), the optical element adjustments may either be causing the system to leave the point of "best focus" or there may be a temporary perturbation in the system. The condition involved is identified by continuing to take readings during subsequent scans and adjustments of the lens system. If the light values continue increasing thereafter, it is assumed that the point of best focus has been passed, and the value recorded for that point is then used. However, if the light values again decrease, it is assumed that there was a temporary perturbation and the lower values continue to be recorded as before until there again is an increase in light values. In this way, a value is recorded for the "darkest" light value of the vertical line in the area I during repeated adjustment of the optical elements. The adjustments of the optical elements are also recorded so that when operations within the area I are completed, there is recorded, as a minimum, the position of the vertical line and the adjustments of the optical system which gave the "best" focus for that vertical line.

When the scanner camera 12 is moved by the motor 13 to examine the area II, another line is examined, as shown, in exactly in the same manner as just described. Similarly, lines in areas III to IX are examined and the positions of the lines are recorded, as are the adjustments of the optical system to obtain the darkest, that is "best focus", for each line. The positions of the optical elements for the best focus at each of the nine areas I to IX are then averaged together to give the optical adjustment for an optimum focus. It will be noted that this optimum focus adjustment is not necessarily the same as the "best focus" for any one of the nine areas. However, as an alternative, statistical techniques may be used to identify statistically "best focus" which may be superior to the average.

Once the position of the optical elements for the optimum focus is determined, the optical elements, for example carriage 7, are moved to that position and necessary physical adjustments are made to ensure that they will be fixed in that position during normal operation.

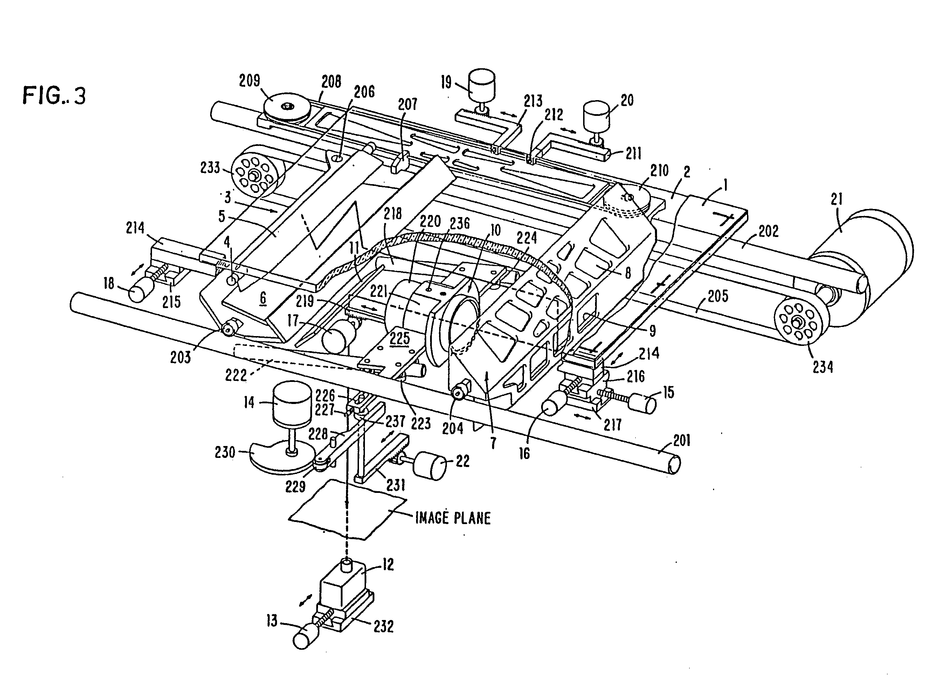

The camera 12 is then moved by motor 13 back to area VIII where there are two additional lines spaced a known distance apart. The area VIII is again scanned; this time, however, while looking for the two lines in turn. When one of the lines is found, its coordinates are recorded and the second line is searched for. When the second line is found, its coordinates (representing the apparent spacing of the two lines) are recorded. The difference between the coordinates, calculated by the processor 29, is a function of the magnification of the optical system and is adjustable by moving the lens 10. The processor 29 supplies signals necessary to step motor 17 (Figure 3) the necessary amount to adjust the magnification of the optical system to bring the apparent spacing between the lines in the area VIII to the amount necessary for a predetermined amount of magnification.

The motor 13 then steps the camera to area VII to again bring the upper line into the image area of the camera 12. The area VII is used a second time, in conjunction with area I, to ensure that the document glass 2 is properly aligned. This is accomplished by finding the top line in area VII and recording its position. Then the primary carriage 3 is moved by motor 21 to bring the top line in area I into the camera 12 image area. The camera 12 scans for the top line and records its position when found. The difference between the coordinates of the top line in area VII and area I is an indication of the skew, or lack of alignment, of the document glass 2. The skew is corrected by rotating a reference edge about a reference corner under the control of motors 15, 16 and 18 (Figure 3) until the coordinates of the horizontal line as detected in areas VII and I are identical.

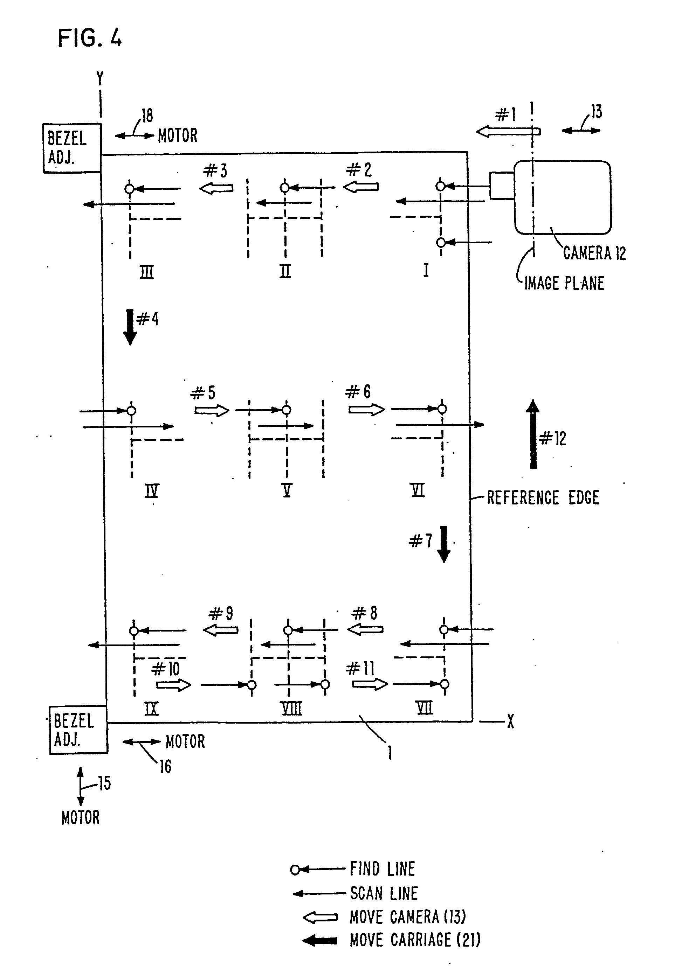

Optical system — Figures 3 and 4

Referring now to Figure 3, an optical system for an electrophotographic apparatus, herein called a "copier", such as a copier, information distributor, facsimile terminal, printer, is shown. The purpose of the system is to scan a "footprint" of light from the lamp 4 across a document, for example a test pattern on a master document 1 placed on the document glass 2. In equivalent systems (for example flash, laser, illumination), the scanning technique is replaced by other illumination devices or by direct deposition (such as ink jet). In the particular optical system shown, the image may be reduced in accordance with the setting of the lens assembly 10, but image enlargement is alternatively possible. For purposes of achieving proper initial adjustment bf the optical system during the manufacturing process, several additional elements are provided, and several additional adjustments which are fixed in normal operation are available for manual adjustment. Most important, the normal position of the photoconductor (in a plain-paper copier — in a coated-paper copier, a non-photoconductive paper support surface is the equivalent) is replaced with the scanner camera 12 focused on the image plane normally occupied by the photoconductor surface. Once the optical elements are adjusted to an optimum series of settings, as seen by the scanner camera 12, replacement of the scanner camera 12 by an optical photoconductor at the image plane examined by the scanner camera 12 will give optimum operation of the electrophotographic apparatus. The particular adjustments made in the apparatus of Figure 3 are those necessary to achieve the sharpest focus at the image plane, to place the relative positions of the optical elements in a position for a desired amount of reduction and to align the document glass 2 in accordance with a predetermined set of reference axes.

There is a pair of rails 201 and 202 carrying carriages 3 and 7 which are movable on the rails by rotation of wheels 203 and 204. A scan drive strap 205 is placed over pulleys 233 and 234 to drive, under control of scan stepper motor 21, the primary carriage 3. The primary carriage 3 is fastened to the scan drive strap 205 by a fastener 206, and there is additionally provided a clamp 207 which is attached to scan drive cable 208 threaded around pulleys 209 and 210. Thus, when the scan stepper motor 21 drives the primary carriage 3 by means of the scan drive strap 205, motion is also imparted to the scan drive cable 208. The secondary carriage 7 is attached to a frame 235 which carries the pulleys 209 and 210. If the scan drive cable 208 is fixed in position, for example to an arm 211 at setscrew point 212, then the secondary carriage 7 will move as the primary carriage 3 moves. The rate of motion of the secondary carriage 7 relative to the primary carriage 3 is 1:2. A normal relationship is provided whereby the secondary carriage 7 moves relative to a fixed reference, half the distance that the primary carriage 3 moves, relative to the same fixed reference. The offset of the primary carriage to the secondary carriage, that is the initial spacing at their closest or most distance position, is a function of where point 212 is attached to cable 208. This point is changed in normal operation by moving arm 211 under the control of reduction drive stepper motor 20. However, during adjustment operations, the set point is not fixed; that is, the setscrew 212 is loose permitting the scan drive cable 208 to slide freely without moving the arm 211. A resolution stepper motor 19 is temporarily connected by an arm 213 and driven to change the fixed position of the scan drive cable by moving the point of connection in accordance with the position of the arm 213. Once a desired relationship between the primary carriage 3 and the secondary carriage 7 is determined, by adjustment of the resolution stepper motor 19, the setscrew 212 is fixed in position and the resolution stepper motor 19 is disconnected. It can, therefore, be seen that adjustment of the optical elements can be easily achieved by stepping the resolution stepper motor 19.

The magnification, that is reduction capability, of the optical system can be changed by adjustment of the position of the reduction drive stepper motor 20 and also requires adjustment of the position of the lens assembly 10. The adjustment of the lens assembly 10 is achieved by moving the lens assembly 10 on rails 218 and 222 under the control of reduction drive motor 14. The reduction drive motor 14 rotates a cam 230 which causes a cam follower 229 to move an arm 228 which, in turn, moves the entire lens assembly 10 by causing plate 225 to slide on the rails 218 and 222 via wheels 223 and 224. The relative position of the lens assembly 10 may be adjusted by sliding the lens 220 inside its barrel 221 in accordance with signals to magnification motor 17 which drives an arm 219. Once the desired position of the lens assembly 10 is achieved, setscrews 236 must be tightened to fix the lens 220 in the lens barrel 221. Further magnification, including reduction, adjustments are made by controlling the position of the plate 225 relative to the cam 230. This is achieved by joint operation of a slot 226 and a setscrew 227 provided on the plate 225. Reduction adjustment stepper motor 22 moves arm 231 to place the shaft of a follower wheel 237 in the slot 226 at the desired position. The setscrew 227 is then brought to that point to fix the relationship of the cam 230 and the plate 225. Both the reduction adjustment stepper motor 22 and the magnification motor 17 are provided for purposes of adjustment only.

The document glass 2 is fastened to a bezel clamp 214 which may be positioned, and thus position the document glass, under the control of document glass stepper motors 15, 16 and 18. The stepper motors 15 and 16 control movement of one corner of the document glass 2 in two axes. The document glass stepper motor 15 causes a block 216 carrying the document glass stepper motor 16 to move in one direction together with the document glass by sliding in block 217. The document glass stepper motor 16 causes motion of the bezel clamp 214 to slide in the block 216 in a direction 90° from the direction caused by document glass stepper 15. Document glass stepper 18 causes motion of the bezel clamp 214 in a direction parallel to that caused by the document glass stepper motor 16, to slide in block 215.

Referring now to Figure 4, the patterns on the master document 1 mounted on the document glass are shown in more detail, together with the relative physical motions involved by driving the motors 13 to 22 shown in Figure 3. Figure 4 shows the camera 12 focused on, and movable in, the image plane (that is without changing its position relative to the image plane, by motor 13). The document glass 2 is movable by bezel adjustment stepping motors 15, 16 and 18, movable in the directions shown by the arrows. The master document 1 is divided into three rows, each having three columns. The areas defined by the rows and columns are designated as areas I to IX, numbered in the sequence in which they are examined. The camera is moved by motor 13 to access areas in its row; that is, areas I, II, III are accessed by movement of the camera 12. It is necessary to move at least the carriage 3 under the control of scan stepper motor 21 to bring another row of areas to the camera 12. For example, it is necessary to bring areas IV, V and VI into the view of the camera 12 before the camera 12 can access those areas by movement under the control of motor 13. In Figure 4, motion of the camera under control of the motor 13 is shown by wide arrows #1, #2, #3, #5, #6, #8, #9, #10, and #11, and motion of the carriages 3 and 7 under control of the motor 21 is shown by dark arrows #4, #7 and #12. The numbers #1, #2, #3, #4, #5, #6, #7, #8, #9, #10, #11, #12 indicate twelve sequential steps of accessing areas I to IX. For example, in step #1, the camera 12 is driven by the camera motor 13 to access area I. Then, in step #2, the camera 12 is driven by the motor 13 to area II. In step #3, the camera 12 is driven to area III, and in step #4, the carriage 3 is stepped by the motor 21 to bring a new row of areas IV, V and VI into the field of the camera 12. Each area of the master document 1 is examined by electronically scanning the camera 12 for a specified indicia. As is shown in Figure 4, there are provided a number of lines, illustratively shown as dashed lines, on the master document 1. Depending upon the step of operation, the camera 12 will examine different aspects of the lines. For example, when area I is examined initially, the vertical line is first located, and once it is found, it is scanned twenty-one times for twenty-one different optical element adjustments. Similar operations occur in areas II to IX. Once the last line in area IX is scanned, the tenth step takes the camera 12 back to area VIII where two vertical lines instead of one are located for purposes of determining magnification. Then, in steps #11 and #12, the two segments of the vertical line in areas VII and I are reexamined to determine the difference between the coordinates of their positions for aligning the document glass 2 until the coordinates are substantially the same. The following table summarizes the operations performed upon the master document 1 as shown in Figure 4:

| Step # | Drive motor | Area No. | Operation |
|---|---|---|---|
| 1 | Camera 13 | I | Find and Scan |
| 2 | Camera 13 | II | Find and Scan |
| 3 | Camera 13 | III | Find and Scan |
| 4 | Carriage 21 | IV | Find and Scan |
| 5 | Camera 13 | V | Find and Scan |
| 6 | Camera 13 | VI | Find and Scan |
| 7 | Carriage 21 | VII | Find and Scan |
| 8 | Camera 13 | VIII | Find and Scan |
| 9 | Camera 13 | IX | Find and Scan |
| 10 | Camera 13 | VIII | Find and Find |
| 11 | Camera 13 | VII | Find |
| 12 | Carriage 21 | I | Find |

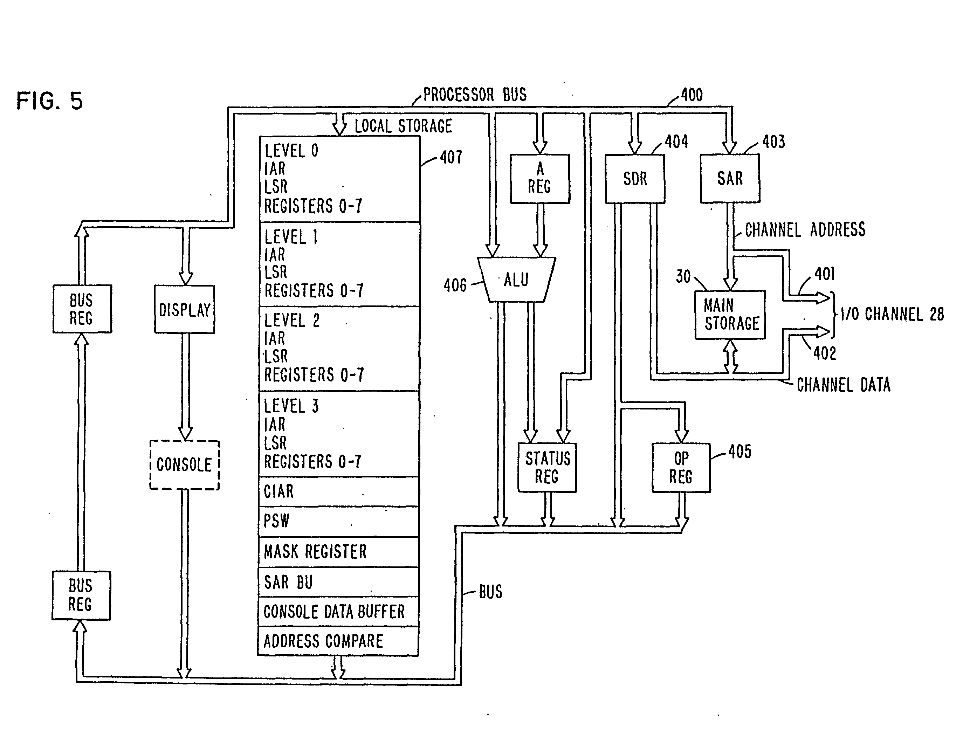

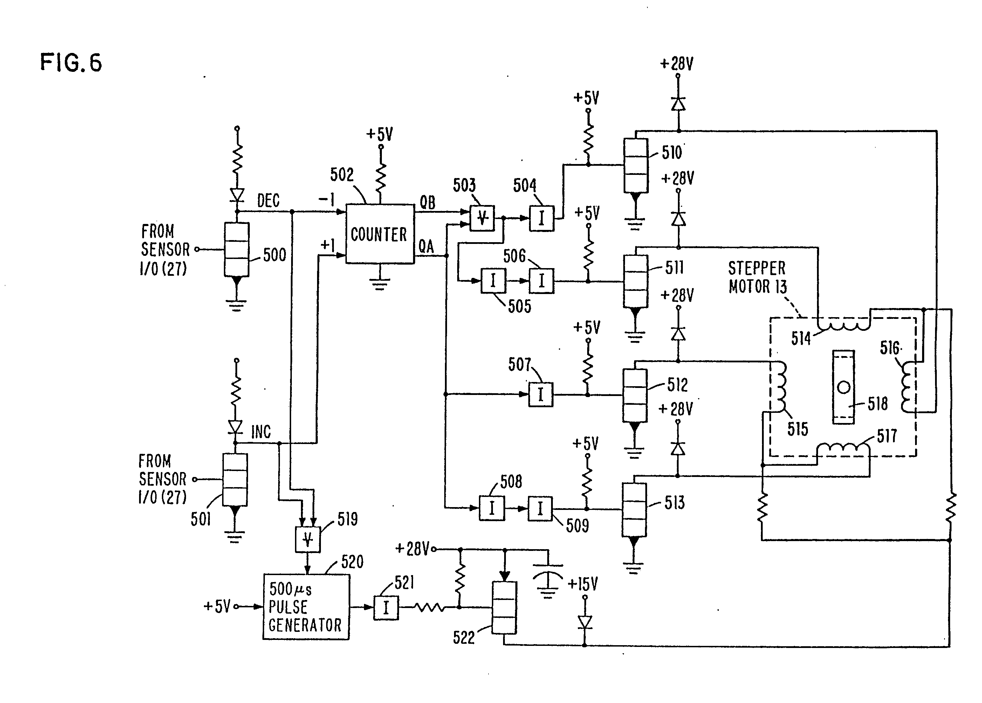

Control circuits — Figures 5 and 6

Referring now to Figure 5, there is shown a generalized block diagram of a commercially available processor which may be utilized as the processor 29 in Figure 1. The particular processor utilized has associated with it input/output channel and storage circuits 28 and 30 and special circuits for dealing with electrical signals from external sources. For purposes of illustration, Figure 5 shows a processor 29 marketed by International Busines Machines Corporation as the IBM Series/1, Model 3, 4953 Processor. It will be understood that a detailed description of this processor is not necessary because the information is generally available. A description of the 4953 Processor is found in a publication entitled "4953 Processor Description", Form No. GA34-0022-2, Third Edition, dated November, 1977, and published by International Business Machines Corporation. It will be understood that other processors may be substituted for the processor disclosed herein without affecting the operation of the invention. Another processor usable in the invention is disclosed in US—A—4,086,658, DE—A—2743284.4, FR—A—2366625 and GB—A—1532609.

Central to the processor 29 shown in Figure 5 is a processor bus 400 to which are connected all the operational registers and other elements necessary to the operation of a processor. Information is transferred to and from external sources via an input/output channel 28 connected to the processor 29 by a channel address bus 401 and a channel data bus 402. The storage 30 is attached to the channel buses 401 and 402 in the embodiment shown. The information in the form of digital data representations supplied to the input/output channel is placed on the channel address and channel data bus 401 and 402 and placed into storage and operated upon the processor 29 in accordance with programs of instructions stored in the main storage 30 and interpreted by facilities in the processor 29. Similarly, results of operations within the processor 29 are transferred to the input/output channel 28 via the address and data buses 401 and 402 under the control of programs of instructions stored in the main storage 30. Locations in the main storage 30 are addressed by digital representations of storage addresses placed into the storage address register 403. The data at the locations specified by the storage address register 403 is placed in storage data register 404. When the data in the storage data register 404 represents instruction information, as opposed to data, the instructions are interpreted by circuitry connected to the operation register 405. Data is manipulated to an arithmetic and logic unit 406 in accordance with the interpreted instructions. A local storage 407 is provided for a large number of specialized registers, counters, and control devices. Additional registers and facilities are utilized within the processor 29 to enable the transfer of information on the buses 401 and 402 in accordance with operations specified by programs of instructions in the main storage 30. An assembly language listing of a program of instructions for configuring the control circuits to operate in accordance with the invention is set out in EP—A—30686. The comments included in the listing are self-explanatory.

Operations involving external devices, such as the operation of stepper motors and the sensing of signals from switches, are performed by sensor input/output circuits normally associated with the processor 29 and described in a publication entitled "IBM Series/1 4982 Sensor Input/Output Unit Description", Form No. GA34-0027-2, Third Edition, dated June, 1978, published by International Business Machines Corporation. Referring to Figure 6, there is shown a circuit for interconnecting digital data representations from the sensor input/output circuits 27 to the stepper motors 13 to 22. For purposes of economy, the operation of only one stepper motor 13 is illustrated in Figure 6. One series of digital signals from the sensor input/output circuit 27 is used to decrement, that is step downward, the stepper motor 13, and another set of digital representations is used to increment, that is step in the other direction, the stepper motor 13. The decrement and increment signals from the sensor input/output circuit 27 are supplied through drive transistors 500 and 501 to a counter 502. The counter 502 may be stepped in either direction, but the exclusive OR circuit 503 guarantees that there will be a signal to drive transistors 510 to 513 only if it is stepped in one direction and not if it is stepped simultaneously in both directions. The counter 502 outputs QA and QB are inverse outputs, and together with inverters 504 to 509 provide signals to field coils 514 to 517 of stepper motor 13 necessary to rotate the rotor 518 one increment in one direction for each digital pulse from sensor input/output 27 placed into transistor 500 and in the other direction for every digital representation entering transistor 501. The incrementing is accomplished by utilizing transistors 510 to 513 to appropriately switch the coils 514 to 517 in anticipation of an increment pulse received from pulse generator 520 when a signal is received at either of the counter 502 inputs. The pulse generator 520 supplies a five hundred microsecond pulse through an inverter 521 and drive transistor 522 to appropriate step the rotor 518 of stepper motor 13.

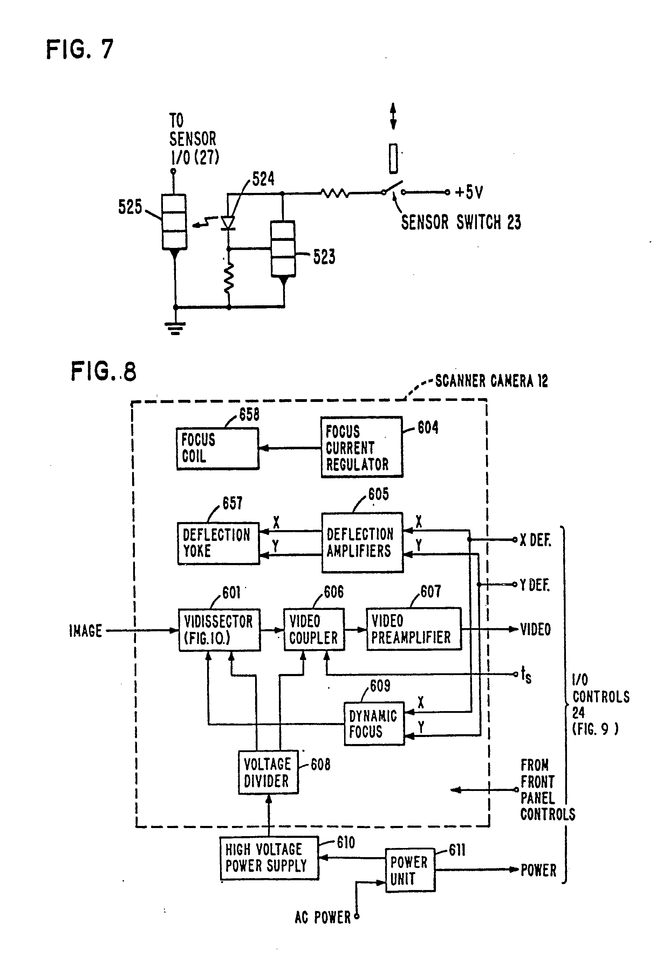

Referring to Figure 7, an example of the connection of a sensor switch 23 to the sensor input/output circuit 27 is illustrated. The purpose of the circuit shown in Figure 6 is to isolate the circuits in the sensor input/output 27 from the potential source +5V when the sensor switch 23 is closed. This closure illuminates a light emitting diode 524 connected across a transistor 523 and light from the diode 524 activates a light sensitive transistor 525.

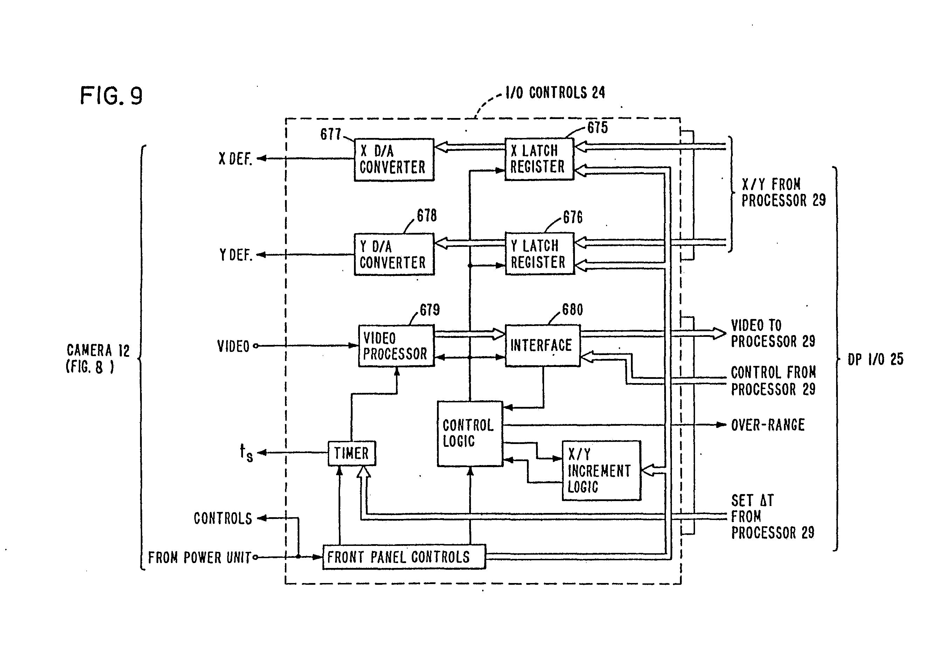

Camera circuits — Figures 8 to 10

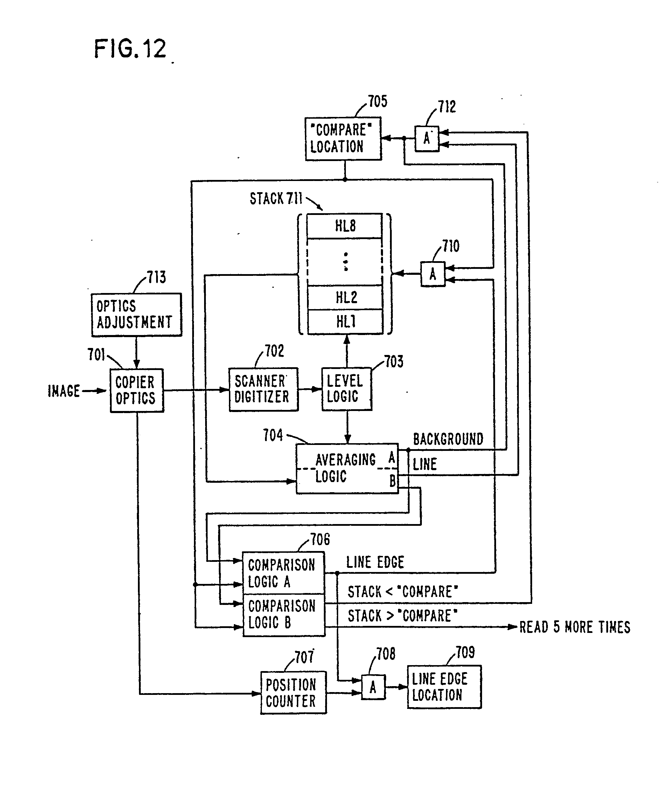

Referring now to Figures 8 to 10, an input/output control 24 and scanner camera 12 usable with the invention will be described. The camera is an ITT Model F5019 camera utilizing an ITT Model F4100 vidissector camera tube. The camera tube is mounted in the camera which is, in turn, connected to an input/output control which is operable to control the scanning of areas viewed by the camera tube and to supply, at an output connected to an input/output channel 28 by way of a data processing input/output connection 25, signals indicating the coordinates of the positions scanned and digital data representing the light value of the points scanned. The vidissector tube is a camera tube receiving an image on a photosensitive cathode which is scanned in accordance with magnetic fields to place the apparent image at different positions on a fixed scanned aperture. As shown in more detail in Figure 10, an image entering the vidissector tube 601 appears in a plane 650 on one side of a translucent photosensitive cathode 651. Deflection coils 657 and 658 control the position of the image from the cathode 651 to the aperture 654 such that only the desired point of that image is projected through the aperture 654. The aperture 654 has a fixed opening across which is scanned the entire image, one point at a time. The amount of light on the aperture 654 determines the magnitude of the electron beam impinging through the aperture at the time a particular point is scanned. Electron multiplier elements 655 amplify the signal to supply at an output 659 at the anode 653 a series of electrical pulses representing the light values at sequentially scanned points on the image 650.

Referring again to Figure 8, the focus coil 658 is driven by focus current regulator source 604, and the deflection coils 657 are driven by deflection amplifiers 605. A video coupler 606 couples the high voltage vidissector 601 anode current on line 659 (Figure 10) to a video preamplifier 607. A power supply 611 is connected to a high voltage power supply 610 which in turn drives the vidissector 601 through a voltage divider 608. Dynamic focusing is achieved by dynamic focusing circuits 609 which allow the vidissector 601 tube to have its photocathode voltage adjusted. In operation, the scanner camera 12 receives deflection signals for the X and Y directions at its deflection amplifiers 605 so that magnetic fields are generated by the deflection yoke 657 to cause the vidissector tube 601 to scan the image 650 and supply video signals corresponding to the light values on the image at the video output of video preamplifier 607.

Referring to Figure 9, there is shown input/output control circuitry 24 which supplies the X and Y deflection signals and receives the video information from the scanner camera 12. The input/output control circuit 24 connects to the data processing input/output circuit 25 which is connected to the processor 29 by way of the input/output channel 28. It functions to convert to deflection signals usable by the scanner camera 12 digital data received from the processor 29. Similarly, it supplies to the processor 29 digital data representations of the video signals which are a function of the light values of the image. The processor 29 supplies to the input/output control 24 digital data words (twenty-eight bits each) representing X and Y coordinates at which the electron beam of the vidissector camera tube 601 is to focus a point. X and Y latch registers 675 and 676 hold this information until digital-to-analog converters 677 and 678 can supply analog signals corresponding to the digital information held in the latch registers 675 and 676. Video information in the form of analog signals from the camera tube 601 is supplied to video processor 679, which samples the signals and converts them to digital data representations which are converted to appropriate voltage levels usable by the processor 29 in interface circuits 680.

Operations — Figures 4, 12, 13, 14 and 15

The operation of the invention will now be described with reference to Figures 4, 12 to 15 in particular. Referring first to Figure 12, there is shown a block diagram useful in illustrating operations performed in the processor 29. The copier optics elements, for example the elements 1 to 12 shown in Figure 1, are enclosed within the copier optics block 701, and the electronic scanner digitzing circuits, for example those shown as elements 12, 24, 25, 28 in Figure 1, appear as scanner digitizer block 702. Blocks 703 to 713 illustrate areas within the input/output channel 28, processor 29 and storage 30 of Figure 1. Adjustments to the optics in Figure 1 achieved by stepping motors 13 to 22, motion interface 26 and sensor input/output circuit 27 are illustrated by the block 713 labelled "optics adjustment".

The operation of the invention will be described in sections based on Figure 4: finding a line, scanning a line, checking magnification and aligning the document glass.

Finding a line

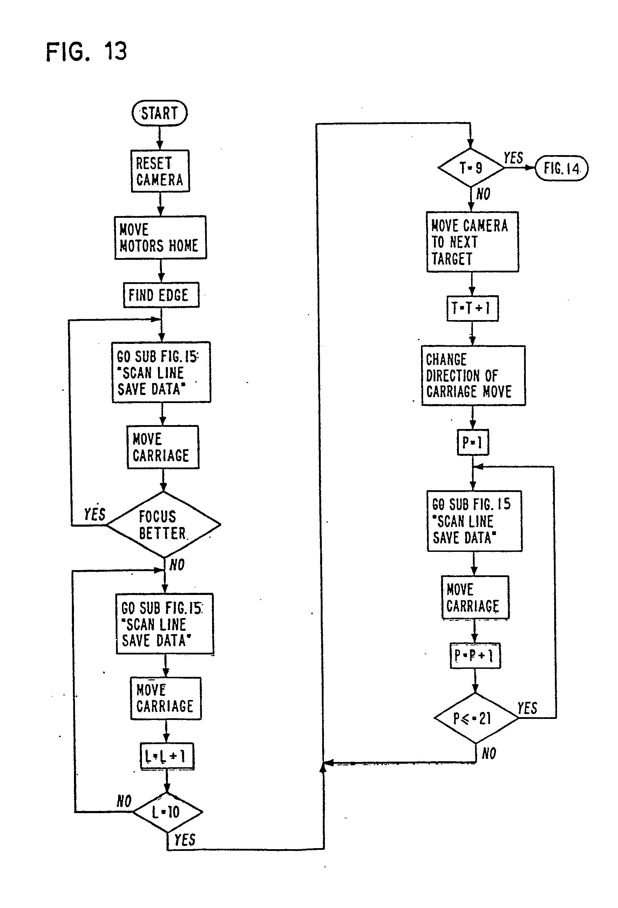

Referring to Figure 4, in each of areas I to IX, there is an operation initially performed to find the location of a line and note its position. This is accomplished by moving the camera 12 under control of motor 13, and carriage 3 under control of motor 21, to an area and initiating an electronic scan of that area. Referring to the flow diagram of Figure 13, the camera 12 is reset to a home (area I) position and a line edge "find" operation commenced. Referring to Figure 12, the image in the copier optics 701 is digitized point by point by the circuitry 702.

Data representing the light level of every point on the image area presented to the camera 12 is digitally represented to level logic 703. As points on the document 1 are scanned, background light levels will, initially, be digitized. At least ten background light level readings are taken, averaged in averaging logic 704 and stored in a "compare" location 705. Comparison logic 706 compares the average background light value in the "compare" location 705 with the average of subsequent light values and updates the "compare" location to contain the current average. When the comparison logic 706 detects an averaging logic 704 output significantly less than the value in the "compare" location (for example 80% of the background value), a signal indicating that a line edge has been sensed is supplied. A position counter 707 is stepped to indicate the coordinates of every point scanned by the scanner digitizer 702 on the master document 1. When the comparison logic 706 indicates that a line edge has been sensed, the current position count in the position counter 707 is gated by AND circuit 708 into a line edge location register 709. The comparison logic 706 causes the average background level in the "compare" location to be gated by AND circuit 710 into a stack 711 consisting of positions HL1 to HL8. This stack 711 is known either as a "push-up" or "push-down" stack, meaning that it operates on the principle of last-in/first-out. The actual operation of the stack 711 need not necessarily correspond to this description. For example, it may be accessed by a pointer digit maintained in a pointer register which accesses one of registers HL1 to HL8 after another, without necessarily causing transfers of data among any of the registers HL1 to HL8.

Scan line

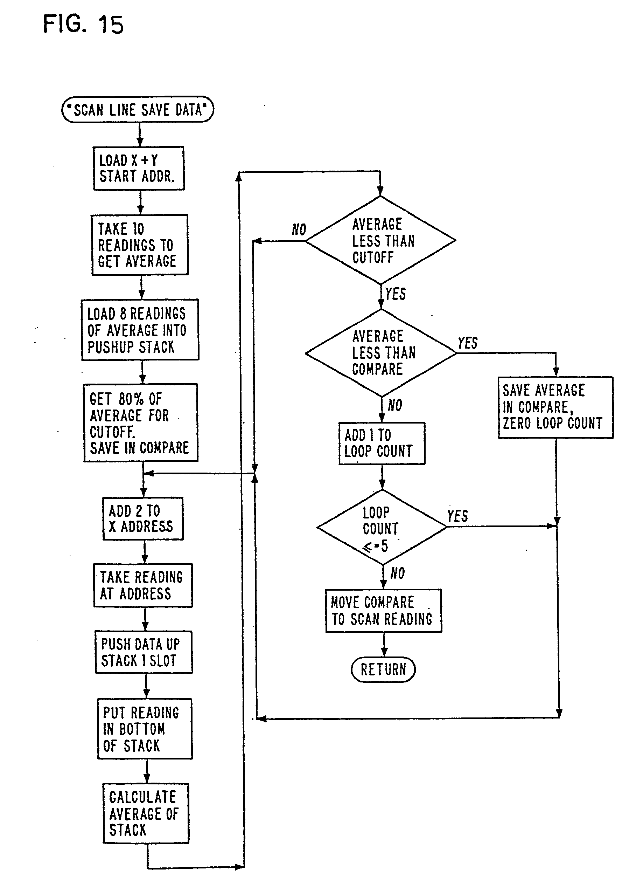

Once the edge of a line within an area is located, the scanning operation will repeatedly cause the copier optics 701 to be adjusted, thus changing its focus, while simultaneously causing the scanner digitizer 702 to examine the line for contrast between the darkness of the line and the brightness of the background. The relative contrast may be reversed by providing a dark background and a light line and looking for the brightest image on the line. In Figures 13 and 15, a "scan line, save data" operation is performed to calculate an average background light value, load it into the stack, read line light values, enter them into the stack, compare the stack average to the calculated background value and recognize when the darkest line light value has been detected. Initially, when the line edge is detected, the average background light value in "compare" location 705 is placed into each of the register HL1 of stack 711. As subsequent points (on the line) are read, the corresponding digital values from the level logic 703 are pushed into the register HL1 of stack 711 and the stack (or its pointer) is advanced. The digital values in the registers HL1 to HL8 are averaged in averaging logic 704 and compared to the "compare" location 705 value by comparison logic 706. If the average of the values in the stack 711 is less than the value in the "compare" location 705, the average value from the averaging logic 704 replaces the previous value in the "compare" location. This is achieved by gating of AND circuit 712 by comparison logic 706. The next point is then read. When averaging logic 704 detects that the current average of the light levels is equal to or more than the contents of the "compare" location 705, the comparison logic 706 causes five more readings to be taken. If the additional readings give another light level average lower than the value in the "compare" location 705, that lower average is entered into the "compare" location and readings are continued as before. However, if all subsequent readings give greater average light values, it is assumed that lowest light level had occurred, and that light level (stored in the "compare" location 705) is used together with indicia of optics adjustment 713 which corresponds to that light level. That is, the condition of best focus is assumed to occur at the point at which the line appears to be darkest with respect to the background.

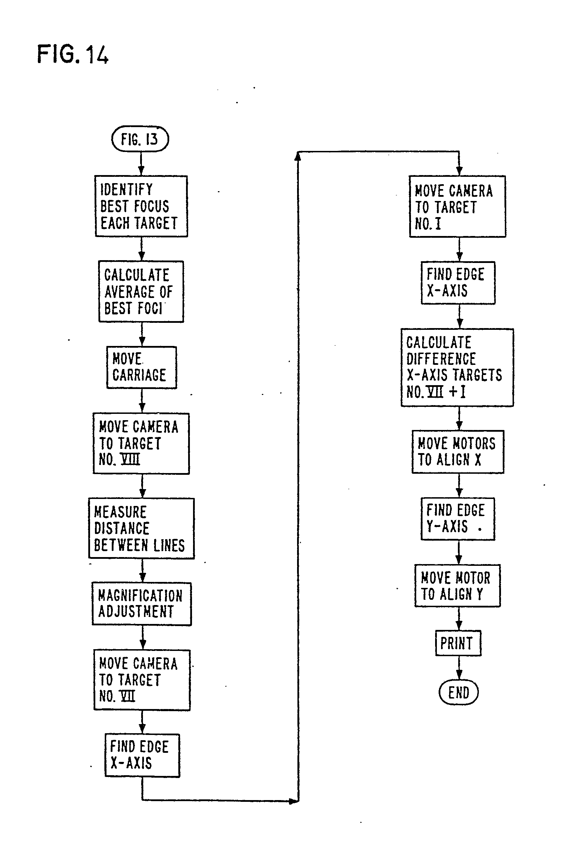

In Figures 13 and 14, the "find" and "scan" operations are repeated for each area I to IX. Then the optimum focus is calculated, the optics are adjusted to give this focus and area VII is examined again.

Magnification check

When the area VIII in Figure 4 is scanned a second time, two successive find operations are repeated for the two outside vertical lines in area VIII. The operations are identical to those described except that the position counter 707 supplies two sets of coordinates to the line edge location 709, one for each line. The processor 29 thereafter calculates the difference between the positions and relates it to the desired magnification. For example, if the apparent distance between the edges of the two lines is greater than desired, the magnification is too large and must be reduced by appropriate adjustment 713 of the optics 701. In Figures 13 and 14, areas VII and I are next examined again.

Document glass adjustment

The examination of areas VII and I in Figure 4 involves the examination of the coordinates of segments of a single vertical line. If the document glass 2 is properly adjusted, the horizontal coordinates will be identical. As described previously, the line edge for each of the areas is determined and stored in the line edge location 709. If there is a difference between the data resulting from the examination of the single line in areas VII and I, appropriate adjustments via the optics adjustment 713 are made to the copier optics 701 until the line segments fall within one line, indicating that the document glass 2 is properly aligned.

While the invention has been particularly shown and described with reference to preferred embodiments thereof, it will be understood by those skilled in the art that various changes in form and details may be made therein without departing from the scope of the invention as claimed.

## Claims

1. Apparatus for adjusting the optical elements (3 to 11) of a copier to positions forming images of lines on an illuminated target background, which have the greatest background-to-line illumination contrast, characterised by an electronic scanner (12) operable to examine repeatedly the same target line images and generate, for each line, signals manifesting the amount of light reflected by that line relative to the target background, driving devices (13 to 22) for positioning the copier optical elements during repeated operation of the scanner, a first circuit for identifying the signals from the scanner representing the greatest light reflection changes caused by scanning across a line width, thereby indicating the sharpest image of the scanned line, and a second circuit for repositioning the copier optical elements (3 to 11) after operation of the scanner as a statistical function of the sharpest images indicated for the scans of all lines.

2. Apparatus according to Claim 1, including means (15, 16, 18) for adjusting the relative positions of the target lines and the scanner.

3. Apparatus according to Claim 1 or 2, including means (13, 21) for adjusting the scanner position to examine different lines.

4. Apparatus according to Claim 1, 2 or 3, in which a position detector indicates the presence of a line during operation of the scanner.

5. A method of aligning the optical elements (3 to 11) of a document copier and adjusting them for the best focus of an image of an illuminated series of lines retained in a place normally occupied by a document, including the steps of scanning each line repeatedly to generate signals encoded to represent values related to the light reflected from the line, adjusting the optical elements to change the image focus for each scan, and comparing successive values and generating additional signals encoded to represent values equivalent to the sharpness of the image of the line for each scan, identifying for each line that position of the optical elements, where the image is sharpest, and generating further signals encoded to represent values equivalent to the average of the values corresponding to the sharpest images, and adjusting the optical elements as a function of the signals representing aforesaid average.

6. A method according to Claim 5, including the steps of examining the different lines, one at a time.

7. A method according to Claim 5 or 6, including the step of adjusting, as a function of the line values, the position of the place where the lines are retained.

## Patentansprüche

1. Vorrichtung zum Ausrichten optischer Elemente (3—11) eines Kopiergerätes in Positionen, in denen Abbildungen von Linien auf einer beleuchteten Hintergrundfläche erzeugt werden, die den größten Beleuchtungskontrast gegen die Fläche aufweisen, gekennzeichnet durch einen elektronischen Abtaster (12) zur wiederholten Prüfung der Abbildungen derselben Linie und zur Erzeugung von Signalen für jede Linie zur Festlegung des Lichtbetrages, den diese Linie relativ zur Hintergrundfläche reflektiert. Antriebsvorrichtungen (13—22) für das Positionieren der optischen Elemente während der wiederholten Operation des Abtasters, eine erste Schaltung zur Identifizierung der Signale des Abtasters, welche die größten Licht-Reflektions-Änderungen darstellen, die durch das Abtasten quer zur Linienbreite verursacht werden, wodurch die schärfste Abbilding der abgetasteten Linie angezeigt wird, und eine zweite Schaltung zum Rückstellen der optischen Elemente (3—11) nach der Abtastoperation als statistische Funktion der schärfsten Abbildungen, die für der Abtastungen aller Linien angezeigt wurden.

2. Vorrichtung nach Anspruch 1, gekennzeichnet durch Mittel (15, 16, 18) zum Jusiteren der Relativ-Positionen der Target-Linien und des Abtasters.

3. Vorrichtung nach Anspruch 1 oder 2, mit Mitteln (13, 21) zum Justieren der Abtasterposition zum Prüfen unterschiedlicher Linien.

4. Vorrichtung nach Anspruch 1, 2 oder 3, in der eine Positionsdetektor das Vorhandensein einer Linie während der Operation des Abtasters anzeigt.

5. Verfahren zum Ausrichten der optischen Elemente (3 bis 11) eines Kopiergerätes für Schriftstücke und zum Justieren derselben für die beste Fukussierung einer Abbildung einer beleuchteten Reihe von Linien an einer Stelle, die normalerweise durch ein Schriftstück belegt ist, einschließlich der Schritte zum wiederholten Abtasten jeder Linie zum Erzeugen kodierter Signale zum Zwecke der Darstellung von Werten, die auf das von der Linie reflektierte Licht bezogen sind, zum Justieren der optischen Elemente zur Änderung der Abbildungsfokussierung für jedes Abtasten, und zum Vergleich aufeinanderfolgender Werte und Erzeugen zusätzlicher kodierter Signale zur Darstellung von zur Bildschärfe der Linie für jedes Abtasten ädquivalenten Werten, zur Identifizierung derjenigen Position der optischen Elemente für jede Linie, in der die Abbildung am schärfsten ist, und zur Erzeugung weiterer kodierter Signal zur Darstellung von Werten, die zum Durchschnitt der Werte entsprechend den schärfsten Abbildungen äquivalent sind, und zur Justierung der optischen Elemente als Funktion der Signale, die den genannten Durchschnitt darstellen.

6. Verfahren nach Anspruch 5, welches die Schritte zur Prüfung jeweils einer der unterschiedlichen Linien einschließt.

7. Verfahren nach Anspurch 5 oder 6, welches den Schritt zum Justieren, als Funktion der Linienwerte, der Position der Linien einschließt.

**Revendications**

1. Dispositif pour ajuster les éléments optiques (3 à 11) d'un copieur dans des positions formant des images de lignes sur un fond cible illuminé, qui présentent le plus grand contraste d'illumination fond/lignes, caractérisé par une unité de balayage électronique (12) fonctionnant pour examiner d'une manière répétitive les mêmes images de lignes de la cible et pour générer, pour chaque ligne, des signaux indiquant la quantité de lumière réfléchie par cette ligne par rapport au fond cible, des dispositifs de commande (13 à 22) pour positionner les éléments optiques du copieur pendant le fonctionnement répété de l'unité de balayage, un premier circuit pour identifier les signaux issus de l'unité de balayage représentant les plus grandes différences de réflexion lumineuse provoquées par le balayage d'une largeur de ligne, indiquant ainsi l'image la plus nette de la ligne balayée, et un deuxième circuit pour repositionner les éléments optiques du copieur (3 à 11) après le fonctionnement de l'unité de balayage en fonction statistique des images les plus nettes indiquées pour les balayages de toutes les lignes.

2. Dispositif selon la revendication 1, comprenant des moyens (15, 16, 18) pour ajuster les positions relatives des lignes de la cible cible et de l'unité de balayage.

3. Dispositif selon la revendication 1 ou 2, comprenant des moyens (13, 21) pour ajuster la position de l'unité de balayage afin d'examiner des lignes différentes.

4. Dispositif selon la revendication 1, 2 ou 3, dans lequel un détecteur de positions indique la présence d'une ligne pendant le fonctionnement de l'unité de balayage.

5. Procédé d'alignement des éléments optiques (3 à 11) d'un copieur de documents et d'ajustement de ceux-ci pour l'obtention de la meilleure focalisation d'une image d'une série de lignes illuminées maintenues à la place normalement occupée par un document, comprenant les étapes de balayage répétitif de chaque ligne afin de générer des signaux codés pour représenter des valeurs par rapport à la lumière réfléchie par la ligne, d'ajustement des éléments optiques pour modifier la focalisation de l'image pour chaque balayage, et de comparaison des valeurs successives et de génération de signaux supplémentaires codés pour représenter des valeurs équivalent à la netteté de l'image de la ligne pour chaque balayage, d'identification pour chaque ligne, de la position des éléments optiques pour laquelle l'image est la plus nette, et de génération d'autres signaux codés pour représenter des valeurs équivalent à la moyenne des valeurs correspondant aux images les plus nettes, et d'ajustement des éléments optiques en fonction des signaux représentant ladite moyenne.

6. Procédé selon la revendication 5 comprenant les étapes d'examen des différentes lignes, une par une.

7. Procédé selon la revendication 5 ou 6 comprenant l'étape d'ajustement, en fonction des valeurs des lignes, de l'emplacement de maintient des lignes.

## FIG. 1

MASTER DOCUMENT 1

DOCUMENT GLASS 2

5
4
6
3
31

8

SECONDARY CARRIAGE 7

PRIMARY CARRIAGE

LENS 10

11

9

OPTICAL PATH

SENSOR SWITCHES 23

SCANNER CAMERA 12 (FIG. 8)

INPUT

STEPPING MOTORS 13-22

OUTPUT

24 — I/O CONTROL (FIG. 9)

MOTION INTERFACE (FIGS. 6; 7) — 26

25 — DP I/O

SENSOR I/O — 27

I/O CHANNEL — 28

PROCESSOR — 29

STORAGE — 30

## FIG. 2

REFERENCE CORNER

REFERENCE EDGE

MASTER DOCUMENT 1

I    VI    VII

II    V    VIII

III    IV    IX

13

18

2

16

15

21

## FIG. 10

VIDISSECTOR 601

657

658

651

652

653

655

IMAGE

650

654

659

−    +

## FIG. 11

654    654

650    651

2

FIG. 3

IMAGE PLANE

FIG. 4

FIND LINE
SCAN LINE
MOVE CAMERA (13)
MOVE CARRIAGE (21)

4

# FIG. 5

PROCESSOR BUS — 400

LOCAL STORAGE — 407

| LEVEL 0<br>IAR<br>LSR<br>REGISTERS 0-7 |
| LEVEL 1<br>IAR<br>LSR<br>REGISTERS 0-7 |
| LEVEL 2<br>IAR<br>LSR<br>REGISTERS 0-7 |
| LEVEL 3<br>IAR<br>LSR<br>REGISTERS 0-7 |
| CIAR |
| PSW |
| MASK REGISTER |
| SAR BU |
| CONSOLE DATA BUFFER |
| ADDRESS COMPARE |

A REG

SDR — 404

SAR — 403

CHANNEL ADDRESS

ALU — 406

MAIN STORAGE — 30

I/O CHANNEL 28 — 401, 402

CHANNEL DATA

STATUS REG

OP REG — 405

BUS REG

DISPLAY

CONSOLE

BUS REG

BUS

0 030 686

FIG.6

## FIG. 7

TO
SENSOR
I/O (27)

524

525

523

+5V

SENSOR SWITCH 23

## FIG. 8

SCANNER CAMERA 12

| 658 FOCUS COIL | ← | 604 FOCUS CURRENT REGULATOR |

657 DEFLECTION YOKE ← X, Y ← 605 DEFLECTION AMPLIFIERS ← X, Y ← X DEF.

Y DEF.

IMAGE → 601 VIDISSECTOR (FIG.10.) → 606 VIDEO COUPLER → 607 VIDEO PREAMPLIFIER → VIDEO

$t_S$

609 DYNAMIC FOCUS ← X, Y

608 VOLTAGE DIVIDER

I/O CONTROLS 24 (FIG. 9)

FROM FRONT PANEL CONTROLS

610 HIGH VOLTAGE POWER SUPPLY ← 611 POWER UNIT → POWER

AC POWER

7

FIG. 9

# FIG.12

# FIG. 13

```
                    ┌─────────┐
                    │  START  │
                    └────┬────┘
                         ↓
                  ┌──────────────┐
                  │ RESET        │
                  │ CAMERA       │
                  └──────┬───────┘
                         ↓
                  ┌──────────────┐
                  │ MOVE         │
                  │ MOTORS HOME  │
                  └──────┬───────┘
                         ↓
                  ┌──────────────┐
                  │ FIND EDGE    │
                  └──────┬───────┘
                         ↓
                  ┌──────────────┐
                  │ GO SUB FIG.15│
                  │ "SCAN LINE   │
                  │ SAVE DATA"   │
                  └──────┬───────┘
                         ↓
                  ┌──────────────┐
                  │ MOVE         │
                  │ CARRIAGE     │
                  └──────┬───────┘
                         ↓
            YES    ◇───────────◇
          ←────────│  FOCUS     │
                   │  BETTER    │
                   ◇─────┬─────◇
                         │ NO
                         ↓
                  ┌──────────────┐
                  │ GO SUB FIG.15│
                  │ "SCAN LINE   │
                  │ SAVE DATA"   │
                  └──────┬───────┘
                         ↓
                  ┌──────────────┐
                  │ MOVE         │
                  │ CARRIAGE     │
                  └──────┬───────┘
                         ↓
                  ┌──────────────┐
                  │ L=L+1        │
                  └──────┬───────┘
                         ↓
          NO       ◇───────────◇
        ←──────────│   L=10     │
                   ◇─────┬─────◇
                         │ YES
```

```
                    ◇───────────◇    YES   ┌────────┐
                    │   T=9      │─────────→│ FIG.14 │
                    ◇─────┬─────◇          └────────┘
                          │ NO
                          ↓
                   ┌──────────────┐
                   │ MOVE CAMERA  │
                   │ TO NEXT      │
                   │ TARGET       │
                   └──────┬───────┘
                          ↓
                   ┌──────────────┐
                   │ T=T+1        │
                   └──────┬───────┘
                          ↓
                   ┌──────────────┐
                   │ CHANGE       │
                   │ DIRECTION OF │
                   │ CARRIAGE MOVE│
                   └──────┬───────┘
                          ↓
                   ┌──────────────┐
                   │ P=1          │
                   └──────┬───────┘
                          ↓
                   ┌──────────────┐
                   │ GO SUB FIG.15│
                   │ "SCAN LINE   │
                   │ SAVE DATA"   │
                   └──────┬───────┘
                          ↓
                   ┌──────────────┐
                   │ MOVE         │
                   │ CARRIAGE     │
                   └──────┬───────┘
                          ↓
                   ┌──────────────┐
                   │ P=P+1        │
                   └──────┬───────┘
                          ↓
                   ◇───────────◇    YES
                   │  P≤=21     │─────────→
                   ◇─────┬─────◇
                          │ NO
```

# FIG. 14

```
        ┌─────────┐
        │ FIG. 13 │
        └─────────┘
             │
             ▼
   ┌──────────────────┐
   │ IDENTIFY         │
   │ BEST FOCUS       │
   │ EACH TARGET      │
   └──────────────────┘
             │
             ▼
   ┌──────────────────┐
   │ CALCULATE        │
   │ AVERAGE OF       │
   │ BEST FOCI        │
   └──────────────────┘
             │
             ▼
   ┌──────────────────┐
   │ MOVE             │
   │ CARRIAGE         │
   └──────────────────┘
             │
             ▼
   ┌──────────────────┐
   │ MOVE CAMERA      │
   │ TO TARGET        │
   │ NO. VIII         │
   └──────────────────┘
             │
             ▼
   ┌──────────────────┐
   │ MEASURE          │
   │ DISTANCE         │
   │ BETWEEN LINES    │
   └──────────────────┘
             │
             ▼
   ┌──────────────────┐
   │ MAGNIFICATION    │
   │ ADJUSTMENT       │
   └──────────────────┘
             │
             ▼
   ┌──────────────────┐
   │ MOVE CAMERA      │
   │ TO TARGET        │
   │ NO. VII          │
   └──────────────────┘
             │
             ▼
   ┌──────────────────┐
   │ FIND EDGE        │
   │ X-AXIS           │
   └──────────────────┘
             │
             └────────────────┐
                              ▼
                    ┌──────────────────┐
                    │ MOVE CAMERA      │
                    │ TO TARGET        │
                    │ NO. I            │
                    └──────────────────┘
                              │
                              ▼
                    ┌──────────────────┐
                    │ FIND EDGE        │
                    │ X-AXIS           │
                    └──────────────────┘
                              │
                              ▼
                    ┌──────────────────┐
                    │ CALCULATE        │
                    │ DIFFERENCE       │
                    │ X-AXIS TARGETS   │
                    │ NO. VII + I      │
                    └──────────────────┘
                              │
                              ▼
                    ┌──────────────────┐
                    │ MOVE MOTORS      │
                    │ TO ALIGN X       │
                    └──────────────────┘
                              │
                              ▼
                    ┌──────────────────┐
                    │ FIND EDGE        │
                    │ Y-AXIS           │
                    └──────────────────┘
                              │
                              ▼
                    ┌──────────────────┐
                    │ MOVE MOTOR       │
                    │ TO ALIGN Y       │
                    └──────────────────┘
                              │
                              ▼
                        ┌─────────┐
                        │ PRINT   │
                        └─────────┘
                              │
                              ▼
                        ┌─────────┐
                        │   END   │
                        └─────────┘
```

# FIG. 15

("SCAN LINE SAVE DATA")

LOAD X + Y
START ADDR.

TAKE 10
READINGS TO
GET AVERAGE

LOAD 8 READINGS
OF AVERAGE INTO
PUSHUP STACK

GET 80% OF
AVERAGE FOR
CUTOFF.
SAVE IN COMPARE

ADD 2 TO
X ADDRESS

TAKE READING
AT ADDRESS

PUSH DATA UP
STACK 1 SLOT

PUT READING
IN BOTTOM
OF STACK

CALCULATE
AVERAGE OF
STACK

AVERAGE
LESS THAN
CUTOFF          NO

YES

AVERAGE
LESS THAN        YES
COMPARE

NO

ADD 1 TO
LOOP COUNT

SAVE AVERAGE
IN COMPARE,
ZERO LOOP COUNT

LOOP
COUNT       YES
≤ -5

NO

MOVE COMPARE
TO SCAN READING

(RETURN)